# EUROPEAN PATENT APPLICATION

(11) **EP 2 533 142 A1**
(43) Date of publication of application: **12.12.2012**
(21) Application number: 11739700.0
(22) Date of filing: 31.01.2011
(51) Int. Cl.: G06F 3/048, A63F 13/00, H04Q 9/00

(54) **COMPUTER, AND RECORDING MEDIUM**

(30) Priority: 05.02.2010 JP 2010023877
(71) Applicant: Capcom Co., Ltd., Chuo-ku Osaka-shi Osaka 540-0037 (JP)
(72) Inventor: NONAKA Daisuke, Osaka-shi Osaka 540-0037 (JP)
(74) Representative: Frost, Alex John
(86) International application number: PCT/JP2011/051879
(87) International publication number: WO 2011/096352

(57) **Abstract**

A wireless controller (WC) and a stick-type controller (MC) are connected to a computer that is caused to function as a reception unit that receives an operation signal from each controller, a specification unit that specifies a control mode that corresponds to the usage of the controllers based on received operation signals, and a presentation control unit that, if a predetermined condition is satisfied, causes a monitor (M) to display a control guidance icon (CI) that is stored in advance in association with the condition and the specified control mode.

## Description

### TECHNICAL FIELD

The present invention relates to a computer and a recording medium, and in particular relates to a method for presenting guidance regarding an operation procedure.

### BACKGROUND ART

In recent years, various home gaming apparatuses have been available for sale, and various games have been able to be played at home. Meanwhile, the prevalence of personal computers has been remarkable, and there has been a prevalence of games that can be purchased as software and played on a personal computer. Games played using a personal computer are normally played by operating a keyboard or mouse. However, when a character is controlled by operating a keyboard, many keys are required for controlling the character, and it is burdensome for the user to learn which keys correspond to which actions. In order to resolve this problem, games have been developed in which guidance regarding keys that can be operated according to the progression of the game operable is displayed on the game screen.

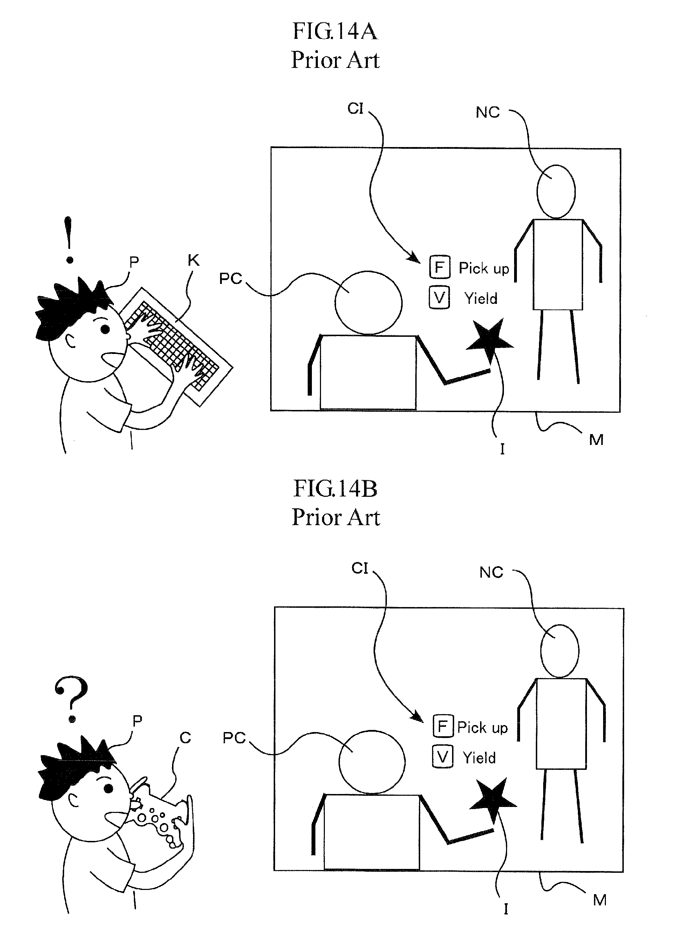

FIGS. 14A and 14B show one example of a game in which guidance regarding keys that can be operated according to the progression of the game is displayed on the game screen.

FIG. 14A shows a scene in the case where a user P is playing a game by operating a keyboard K, and in this scene, a character (referred to hereinafter as "player character") PC controlled by the user P has approached an item I. Since the distance between the player character PC and the item I is within a predetermined distance, icons CI for giving guidance regarding keys that can be operated (referred to hereinafter as "control guidance icons") are displayed on the game screen that is being displayed on a monitor M. The control guidance icons CI show that an operation for picking up the item I can be performed by pressing the "F" key, and that the item I can be yielded to a character (referred to hereinafter as "companion character") NC, who is a companion that is also going about with the player character, by pressing the "V" key. Even if the user P has forgotten which key to press in order to pick up the item I, the user P can remember the operation procedure by looking at the control guidance icons CI.

Meanwhile, controllers exclusively for personal computer have also been developed in order to more intuitively control the player character PC. Games in which operations can be performed using both this type of controller and a keyboard have also been developed.

### PRIOR ART DOCUMENTS

### NON-PATENT DOCUMENT

Non-patent Document 1 : Game software "Resident Evil 5 (Games for Windows (registered trademark) LIVE" User Guide (for Japan), pp. 6 to 9, pp. 14 to 15, Capcom Co., Ltd.

### PATENT DOCUMENT

Patent Document 1: JP-A-2009-072319

### SUMMARY OF THE INVENTION

### PROBLEM TO BE SOLVED BY THE INVENTION

However, problems such as the following arise when a controller is used to play a game in which control guidance icons CI are displayed. Specifically, the keys (buttons) that are used are different when performing operations using the keyboard K and when performing operations using the controller, and since the control guidance icons CI are for giving guidance regarding keys that are operable when operating the keyboard K, there is the risk of the user P becoming confused by looking at the control guidance icons CI while operating the controller.

FIG. 14B shows a scene in the case where the user P is playing a game by operating a controller C, and in this scene, the player character PC has approached the item I. Since the distance between the player character PC and the item I is within a predetermined distance, the control guidance icons CI are displayed on the game screen that is being displayed on the monitor M. However, these control guidance icons CI are for giving guidance regarding keys that are operable when operating the keyboard K, and show that the "F" key or the "V", which the controller C does not have, can be pressed. Accordingly, after viewing these control guidance icons CI, the user P will perform the wrong operation, become confused, or so on.

Games in which two controllers can be used at the same time have also been developed in recent years. Games have also been developed in which operations can be performed by using two controllers at the same time or using only one of the two controllers (e.g., see JP 2009-072319A). With these types of games, there are cases where the buttons that are operated are different between a control mode in which two controllers are used at the same time and a control mode in which only one of the controllers is used. In such cases, there is the risk of confusing the user P if operations are being performed in one control mode and control guidance for the other control mode is displayed. This confusion due to the display of control guidance is not limited to operations performed in games and can occur also with a computer that can be operated using multiple control members.

The present invention was devised in light of the above circumstances, and an object thereof is to provide a method for, when there are multiple control members for operating a computer, providing control guidance that corresponds to the control members that are being used (or control mode).

### MEANS FOR SOLVING PROBLEM

A computer provided by a first aspect of the present invention is a computer to which operation units for inputting an operation signal can be connected, the computer including: a reception unit that receives an operation signal from an operation unit; a specification unit that specifies a used operation unit that is an operation unit being used by a user, based on the operation signal received by the reception unit; a storage control unit that stores presentation information in a storage unit in association with a predetermined condition and the used operation unit, the presentation information being information that is to be presented to the user; and a presentation control unit that, when the predetermined condition is satisfied, presents the presentation information stored in the storage unit using a presentation unit according to the predetermined condition and the used operation unit specified by the specification unit.

Note that in the present invention, "connection" is a concept that includes not only wired connection by a cable or the like, but also wireless connection by radio communication or the like. Also, in the case where an operation unit is built into the computer (e.g., a so-called portable gaming apparatus or the like, in which the main body is provided with a monitor, buttons, and the like) , it is assumed that the built-in operation unit is "connected". Also, besides a controller, "operation unit" is a concept that includes a keyboard, a mouse, a touch panel, a microphone for audio input, a camera for reading a person' s action as operation input, various types of sensors, and the like. Also, an "operation" performed on an operation unit is a concept that includes an operation of pressing a button that the operation unit is provided with, an operation of tilting or pressing a stick (lever), and the like. Furthermore, moving an operation unit and changing the orientation of an operation unit are also included in the concept of an "operation". Moreover, an operation of starting up an operation unit, such as an operation of pressing (or switching) a power button, is also included in the concept of an "operation". Still further, the concept of an "operation" performed on an operation unit also includes touch input performed on a touch panel, a mouse click, audio input to a microphone, and the action of a person or the like in order to change an image captured by a camera. Accordingly, the concept of an "operation signal" includes all signals output due to operations performed on an operation unit, and also includes a signal (connection signal) that is output when a power button is pressed while an operation unit is in the powered-off state. Note that wired connection by a cable or the like and the internal provision of an operation unit are also included in the concept of a "connection signal" since these connections are also detected. Also, "used operation unit" is not limited to being one "operation unit", and may be one set of two or more "operation units" that are used at the same time.

In a preferable aspect of the present invention, the specification unit specifies the used operation unit so as to include the operation unit that transmitted the operation signal.

In a preferable aspect of the present invention, a first operation unit and a second operation unit among the operation units are connected to the computer, the second operation unit being associated with the first operation unit, and when the computer received a predetermined operation signal, the specification unit specifies the used operation unit so as to not include the second operation unit.

In a preferable aspect of the present invention, the specification unit specifies whether the used operation unit is a first used operation unit that is a used operation unit including only one operation unit, or a second used operation unit that is a used operation unit including a plurality of operation units.

In a preferable aspect of the present invention, the first used operation unit includes a predetermined operation unit, and the second used operation unit includes the predetermined operation unit and the other operation units.

In a preferable aspect of the present invention, the predetermined operation unit and the other operation units are different types of operation units.

In a preferable aspect of the present invention, the presentation control unit causes the presentation unit to present presentation information that the user can perceive visually.

In a preferable aspect of the present invention, the presentation unit is a display apparatus, and the presentation information is image information for indicating an operation procedure.

In a preferable aspect of the present invention, the presentation control unit presents presentation information that the user can perceive aurally.

In a preferable aspect of the present invention, each operation unit is a controller for controlling a character.

A recording medium provided by a second aspect of the present invention is a computer-readable recording medium having recorded thereon a program for causing a computer to which operation units for inputting an operation signal can be connected to function as: a reception unit that receives an operation signal from an operationunit; a specificationunit that specifies ausedoperation unit that is an operation unit being used by a user, based on the operation signal received by the reception unit; a storage control unit that stores presentation information in a storage unit in association with a predetermined condition and the used operation unit, the presentation information being information that is to be presented to the user; and a presentation control unit that, when the predetermined condition is satisfied, presents the presentation information stored in the storage unit using a presentation unit according to the predetermined condition and the used operation unit specified by the specification unit.

In a preferable aspect of the present invention, the specification unit specifies the used operation unit so as to include the operation unit that transmitted the operation signal.

In a preferable aspect of the present invention, a first operation unit and a second operation unit among the operation units are connected to the computer, the second operation unit being associated with the first operation unit, and when the computer received a predetermined operation signal, the specification unit specifies the used operation unit so as to not include the second operation unit.

In a preferable aspect of the present invention, the specification unit specifies whether the used operation unit is a first used operation unit that is a used operation unit including only one operation unit, or a second used operation unit that is a used operation unit including a plurality of operation units.

In a preferable aspect of the present invention, the first used operation unit includes a predetermined operation unit, and the second used operation unit includes the predetermined operation unit and the other operation units.

In a preferable aspect of the present invention, the predetermined operation unit and the other operation units are different types of operation units.

In a preferable aspect of the present invention, the presentation control unit causes the presentation unit to present presentation information that the user can perceive visually.

In a preferable aspect of the present invention, the presentation unit is a display apparatus, and the presentation information is image information for indicating an operation procedure.

In a preferable aspect of the present invention, the presentation control unit presents presentation information that the user can perceive aurally.

In a preferable aspect of the present invention, the computer is a gaming apparatus, and each operation unit is a controller for controlling a character.

### BRIEF DESCRIPTION OF DRAWINGS

FIG. 1A is a diagram for describing control guidance display in a gaming apparatus according to an embodiment of the present invention.
FIG. 1B is another diagram for describing control guidance display in the gaming apparatus according to the embodiment of the present invention.
FIG. 2 is a configuration diagram of the gaming apparatus according to the embodiment of the present invention.
FIG. 3 is a diagram for describing a controller (wireless controller).
FIG. 4 is a diagram for describing a controller (stick-type controller).
FIG. 5 is a diagram for describing the correspondence between operations buttons and the like of the controllers.
FIG. 6 is a configuration diagram showing an internal configuration of a controller (stick-type controller).
FIG. 7 is a diagram for describing an example of a controller assignment table.
FIG. 8 is a flowchart for describing processing for making a control mode determination when a game starts.
FIG. 9 is a flowchart for describing processing for making a control mode determination when a game is in progress.
FIG. 10 is a diagram for describing an example of an operation procedure table.
FIG. 11 is a flowchart for describing processing for displaying control guidance when a game is in progress.
FIG. 12A is a diagram for describing another example of control guidance display.
FIG. 12B is a diagram for describing yet another example of control guidance display.
FIG. 13A is a diagram for describing still another example of control guidance display.
FIG. 13B is a diagram for describing still another example of control guidance display.
FIG. 14A is a diagram for describing control guidance display in a conventional gaming apparatus.
FIG. 14B is another diagram for describing control guidance display in a conventional gaming apparatus.

### EMBODIMENTS CARRYING OUT THE INVENTION

The following is a specific description of the case of applying a program according to the present invention to game software as a preferred embodiment of the present invention, with reference to the accompanying drawings. The following description takes the case of progressing through an action game in a home gaming apparatus (referred to hereinafter as "gaming apparatus") .

In the action game of the embodiment, a player character fights enemy characters in a three-dimensional virtual game space, and the game progress as the player character defeats enemy characters. Two types of controllers can be connected to the gaming apparatus using short-range wireless communication that employs Bluetooth (registered trademark) technology. Note that one example of the gaming apparatus is a PlayStation (registered trademark) 3. When the controllers are used for the first time, an authentication process is performed with the main body of the gaming apparatus (since the concept of a "gaming apparatus" also includes controllers, the term "main body of the gaming apparatus" or simply "main body" will be used when referring to the member to which the controllers are connected), and the controllers are authorized as connection partners. After being authorized, the authentication process and the establishment of a connection are automatically performed when the controllers are powered on. In one embodiment, up to a total of seven controllers can be connected to the main body of the gaming apparatus. When transmitting transmission data such as operation signals, the controllers attach identification information (information for identifying the controllers, such as an identification number), controller type information, and the like to the transmission data. Upon receiving transmission data, the main body of the gaming apparatus recognizes which controller transmitted the transmission data based on the attached identification information.

Note that the connections between the main body of the gaming apparatus and the controllers are not limited to this, and may be connections by wireless communication using the IrDA communication system that employs infrared light or the like, or may be wired connections using cables or the like. Note that in the case where each controller performs communication using a different frequency or the case of wired connections, the main body of the gaming apparatus can recognize the data communication partners by the carrier frequency or the connection terminal of the communication line. In other words, the main body of the gaming apparatus can recognize which controller transmitted transmission data, and the carrier frequency or which connection terminal a controller is connected to is considered to be the identification information. For this reason, there is no need for the controllers to attach separate identification information to the transmission data.

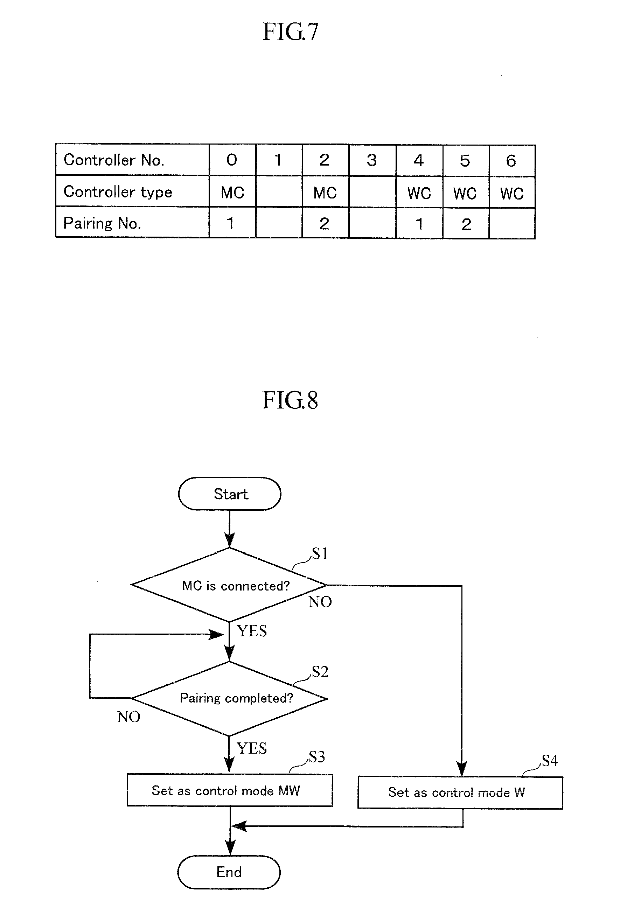

One of the two types of controllers is a controller that can be used by itself to control the player character. This controller is referred to as the "wireless controller". The other controller is mainly used to cause the player character to use a weapon, and cannot cause the player character to move to another location, and therefore cannot be used by itself. This controller is referred to as the "stick-type controller". In one embodiment, the stick-type controller can also be used as a continuously-paired wireless controller after being paired with the wireless controller . Pairing refers to the association of the stick-type controller and the wireless controller, and is set by assigning a pairing number in a later-described controller assignment table (see FIG. 7) . A description of the pairing procedure will not be given here. Also, the stick-type controller includes various sensors (described later) and detects and outputs rotation and tilting of the stick-type controller. The movement and orientation of the stick-type controller is identified based on the detected rotation and tilting and considered to be operation input. Accordingly, the user can cause the player character to use a weapon by moving and changing the orientation of the stick-type controller so as to resemble a weapon (e.g., a gun).

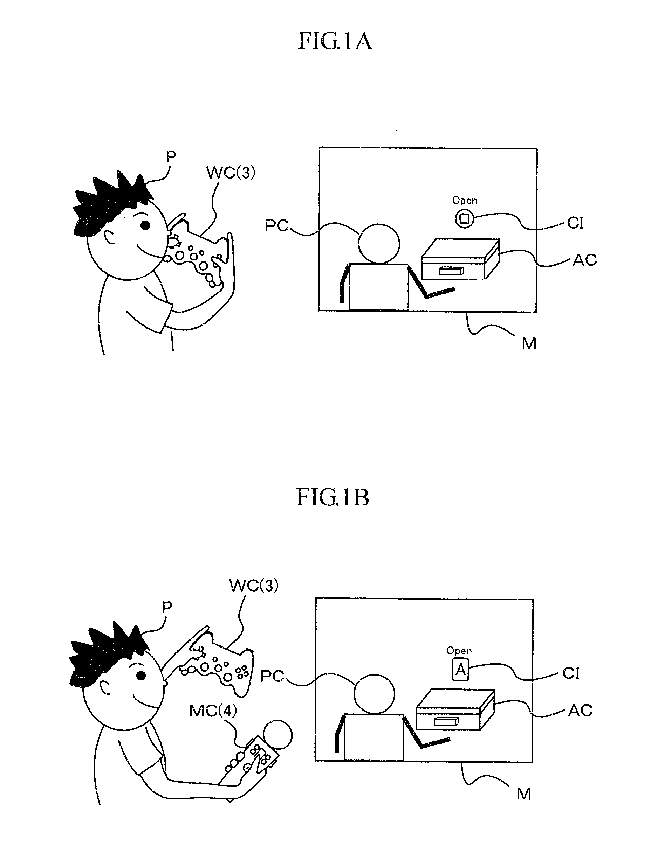

In the case of a control mode in which the user controls the player character using the wireless controller by itself (this control mode is hereinafter referred to as "control mode W") , the user holds the wireless controller in both hands and operates operation buttons and the like (see FIG. 1A) . On the other hand, in the case of a control mode in which the user controls the player character using both the wireless controller and the stick-type controller (this control mode is hereinafter referred to as "control mode MW") , the user holds the wireless controller in the left hand and operates mainly the operation buttons and the like on the left side of the wireless controller, and holds the stick-type controller in the right hand and operates operation buttons thereof and moves the stick-type controller itself (see FIG. 1B). Note that the control mode is determined based on the controller (s) being used by the user, and the controller (s) being used by the user in the control modes correspond to the "used operation unit" of the present invention. Specifically, in the case of the control mode W, the wireless controller corresponds to the used operation unit ("first used operation unit" of the present invention), and in the case of the control mode MW, the set of the wireless controller and the stick-type controller corresponds to the used operation unit ("second used operation unit" of the present invention). Also, in this case, the "wireless controller" corresponds to the "predetermined operation unit" of the present invention.

While the game is in progress, the user can change from the control mode MW (i.e., using both the wireless controller and the stick-type controller) to the control mode W (i.e., using only the wireless controller) , and can again change back to the control mode MW. The current control mode is determined according to operation input that is input from the controllers. A control mode determination method will be described later. Operation content is determined based on the control mode and operation signals that are input, and thus the player character is controlled.

Also, guidance regarding operations that the user can perform is displayed on the game screen according to the progression of the game. At this time, control guidance that corresponds to the control mode is displayed on the game screen. Specifically, in the case of the control mode W, control guidance for when operations are performed using only the wireless controller (e.g., icons indicating operation buttons and the like of the wireless controller) is displayed, in the case of the control mode MW, control guidance for when operations are performed using the wireless controller and the stick-type controller (e.g., icons indicating operation buttons of the stick-type controller) is displayed. Hereinafter, this display for providing control guidance is referred to as "control guidance display".

FIGS. 1A and 1B are diagrams for describing control guidance display in the gaming apparatus of the embodiment, and show a scene in which the player character PC has approached an attaché case AC, and the user P at the time.

FIG. 1A shows the case where the user P is playing the game in the control mode W, in which only the wireless controller WC is used. Since the player character PC has approached the attaché case AC, a control guidance icon CI is displayed in the vicinity of the attaché case AC (above the attaché case AC in FIG. 1A) on the game screen being displayed by the monitor M. The control guidance icon CI is configured by an icon showing "□ button" (square button) and the characters "Open" that indicate a player character PC action. This shows that the user P needs to press the "□ button" (square button) of the wireless controller WC in order to open the attaché case AC. The user P can learn the operation procedure for opening the attaché case AC by looking at the control guidance icon CI.

FIG. 1B shows the case where the user P is playing the game in the control mode MW, in which both the wireless controller WC and the stick-type controller MC are used. In this case, a control guidance icon CI is displayed in the same situation as in the case shown in FIG. 1A, but the icon indicating the button that is to be pressed is an icon indicating "A button". This is because the operation for opening the attaché case AC in the control mode MW is different from that in the control mode W, and the "A button" of the stick-type controller MC being held in the right hand needs to be pressed when in the control mode MW. In this way, control guidance that corresponds to the control mode is displayed in one embodiment. Accordingly, the user P can learn the operation procedure that corresponds to the control mode by looking at the control guidance icon CI.

Note that the control guidance icon CI is removed from the game screen once the user P has input the operation that corresponds to that control guidance icon CI, once the player character PC has moved away from the attaché case AC, or the like. Also, there is no limitation on the display position of the control guidance icon CI, and the display position may be a central position on the game screen, for example. Also, there is no limitation on the display mode of the control guidance icon CI. Characters indicating the action may be displayed below the icon indicating the operation button, or the icon indicating the operation button may be displayed by itself.

First, the hardware configuration of the embodiment will be described below.

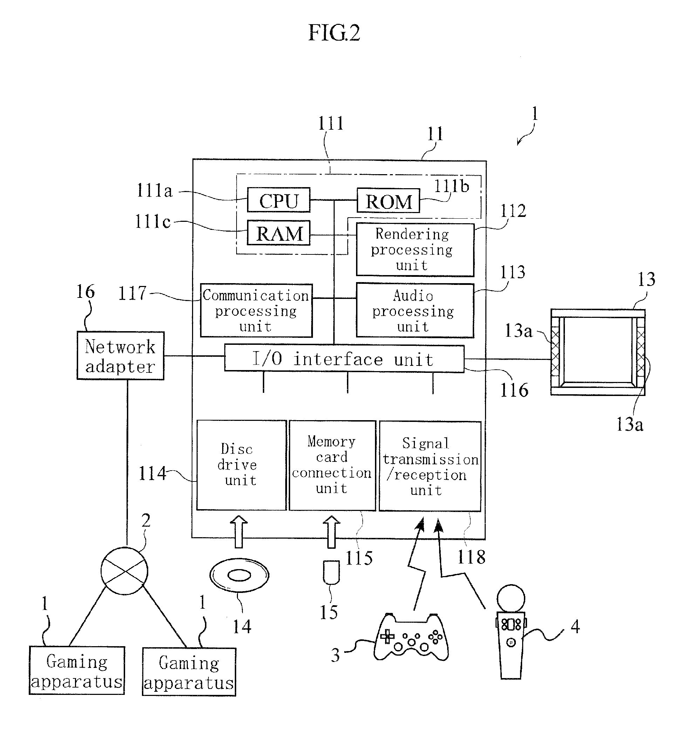

FIG. 2 is a configuration diagram of the gaming apparatus of the embodiment. A gaming apparatus 1 includes a main body 11 and controllers 3 and 4. The controllers 3 and 4 are connected to the main body 11 through short-range wireless communication. Note that although FIG. 2 shows a state in which one controller 3 and one controller 4 are connected, more than one of each can be connected. A monitor 13 is connected to the main body 11 via a dedicated cable. Also, a disc 14 having a game program and game data recorded thereon can be mounted in the main body 11. Furthermore, a memory card 15 for storing game data when necessary can be mounted in the main body 11.

The main body 11 includes a control unit 111, a rendering processing unit 112, an audio processing unit 113, a disc drive unit 114, a memory card connection unit 115, an I/O interface unit 116, a communication processing unit 117, and a signal transmission/reception unit 118. The rendering processing unit 112, the audio processing unit 113, the I/O interface unit 116, and the communication processing unit 117 are connected to the control unit 111. Also, the disc drive unit 114, the memory card connection unit 115, the signal transmission/reception unit 118, and the monitor 13 are connected to the I/O interface unit 116.

A disc 14 having the above-described action game software recorded thereon is mounted in the disc drive unit 114 of the gaming apparatus 1. The game program and game data on the disc 14 are read to a RAM 111c (described later) in the control unit 111 by the disc drive unit 114. The user P can enjoy the game content as the game program is executed by a CPU 111a (described later) . The user P can control the player character PC and progress through the game by operating the controllers 3 and 4 (described later) .

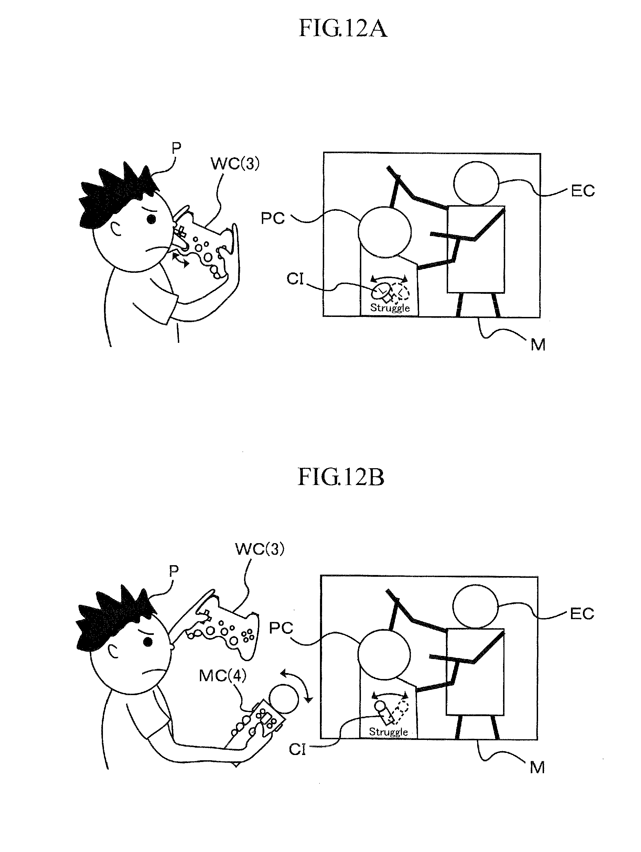

The game data on the disc 14 includes character data on the player character PC, the enemy character EC (see FIGS. 12A and 12B), and the like, image data for characters, backgrounds, and the like, audio data for sound effects and the like, various types of tables that are referenced as the game progress and when rendering is performed, and the like.

The control unit 111 has amicrocomputer that performs overall control of the operations of the main body 11. The microcomputer is constituted from the CPU 111a, a ROM 111b, the RAM 111c, and the like. These constituent elements are connected to each other by a bus line.

The CPU 111a performs overall control of game progression by executing the game program that was read to the RAM 111c. More specifically, when operation signals corresponding to operations performed by the user P are input from the controllers 3 and 4 via the signal transmission/reception unit 118, the CPU 111a performs a predetermined game progression process on those operation signals in accordance with the game program. Based on the results of that process, the CPU 111a displays two-dimensional images (referred to hereinafter as "game images") that represent a three-dimensional space, for example, on the display screen of the monitor 13. Based on the processing results, the CPU 111a also outputs audio such as sound effects to speakers 13a (described later) of the monitor 13.

In one embodiment, when the controller 3 or the controller 4 is started up for the first time, the CPU 111a performs an authentication process on the controller and authenticates it as a connection partner. A specific description of this authentication process will not be given since it is the ordinary authentication process in Bluetooth (registered trademark) technology. Also, the CPU 111a determines whether the controllers 3 and 4 are connected to the main body 11 of the gaming apparatus by determining whether the power of the controllers 3 and 4 is on (whether an operation signal has been received) . The CPU 111a also determines whether the current control mode is the control mode W or the control modeMW. The CPU 111a displays control guidance on the display screen of the monitor 13 in accordance with the result of that determination. Control mode determination process and control guidance display process will be described later.

The ROM 111b stores a basic program for causing the gaming apparatus 1 to perform basic functions. The basic program includes a program for a disc loading function, which is for reading out the game program and the game data recorded on the disc 14, for example. When the disc 14 is mounted in the disc drive unit 114, the CPU 111a causes the disc drive unit 114 to operate in accordance with the basic program in the ROM 111b so as to read the game program and the game data from the disc 14 to the RAM 111c, and sets the gaming apparatus 1 to the game start state.

The RAM 111c provides an area for the storage of the game program and the game data that are read from the disc 14, and a work area for the CPU 111a to execute the game program.

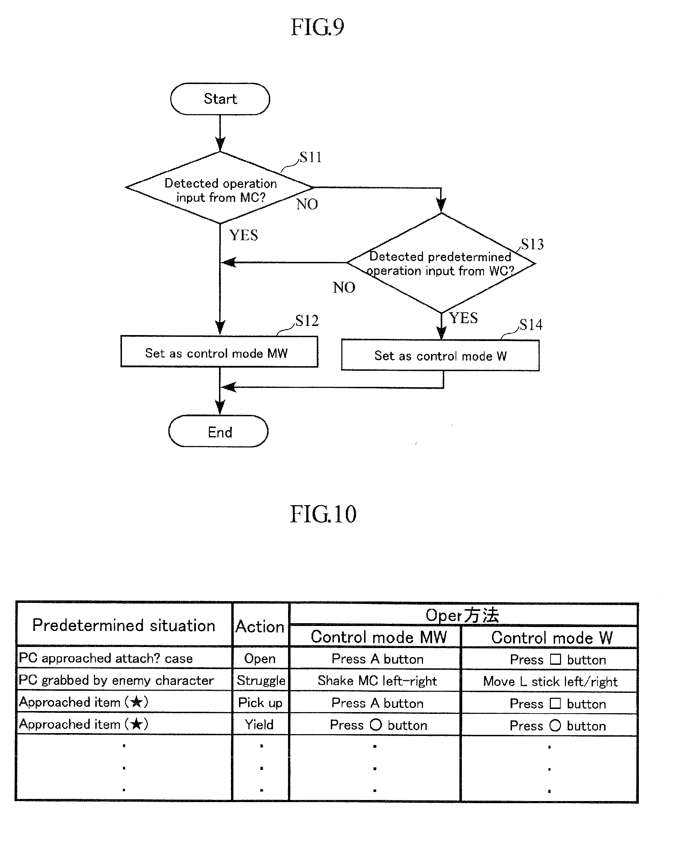

The game program is configured by a combination of multiple programs such as a game progression program and a graphic control program. The game progression program is a program for controlling actions performed by the player character PC displayed on the monitor 13 based on operation signals from the controllers 3 and 4. The graphic control program is a program for controlling game images that are to be displayed on the monitor 13. Also, in one embodiment, the RAM 111c stores a later-described operation procedure table (see FIG. 10) and a controller assignment table (see FIG. 7) as game data.

Based on operation signals from the controllers 3 and 4, the CPU 111a reads the game program, image data, and the like from the disc 14 to the RAM 111c as necessary. The CPU 111a determines the content of the game images to be displayed on the monitor 13 by performing processing on such data and executing the game program.

The rendering processing unit 112 performs various types of computation process that is necessary for rendering process. The CPU 111a outputs a rendering instruction to the rendering processing unit 112 every 1/60 sec, for example. Here, the CPU 111a determines an image to be displayed on the monitor 13, reads out image data (polygon data for objects such as characters, and background data) that is necessary for rendering the image, light source data, and the like from the RAM 111c, and supplies the readout data to the rendering processing unit 112. The CPU 111a also supplies the rendering processing unit 112 with position data for each character and operation signals input from the controllers 3 and 4.

Based on these operation signals, the image data, and the like, the rendering processing unit 112 computes data necessary for rendering (data regarding the positional relationship between objects and the background, the coordinates of polygons that configure the objects on the screen of the monitor 13, textures corresponding to the polygons, reflection characteristics of the polygons, and the like), and creates display screen image data corresponding to one frame in a video RAM (not shown) in the rendering processing unit 112 based on the result of the computation. The created display screen image data is displayed by being output to the monitor 13 as a video signal every 1/60 sec, for example.

The audio processing unit 113 performs various types of computation processthatisnecessaryfor processing for generating audio such as sound effects. The CPU 111a determines sound effects or the acoustic content of background music that is to be output from the speakers 13a of the monitor 13, and outputs an audio instruction to the audio processing unit 113 . The audio processing unit 113 reads out a sound effect or background music audio data from the RAM 111c based on the audio instruction. The audio processing unit 113 then subjects the audio data to predetermined manipulation processing and digital/analog conversion processing, and then outputs the resulting data to the speakers 13a.

Based on a loading instruction (readout instruction designating the game program and game data that are to be loaded) from the CPU 111a, the disc drive unit 114 reads out the game program and game data that are recorded on the disc 14.

The memory card connection unit 115 is a unit by which information regarding game progression is written to and read out from the memory card 15. When a "data save" instruction is received from the user P while the game is in progress or when the game is ended, information regarding the game progression that is recorded in the work area of the RAM 111c (this information includes, for example, information regarding the types of game characters that were set by the user P and various types of awards such as acquired points and items) is recorded to the memory card 15 by the CPU 111a via the memory card connection unit 115. Information regarding game progression that is recorded in the memory card 15 is also recorded to the RAM 111c by the CPU 111a before the game starts.

The I/O interface unit 116 transfers, to the control unit 111, the game program and game data that were read out by the disc drive unit 114 or the memory card connection unit 115 and operation signals from the controllers 3 and 4 that were received by the signal transmission/reception unit 118. The I/O interface unit 116 also transfers video signals, audio signals, and the like from the control unit 111, the rendering processing unit 112, and the audio processing unit 113 to the monitor 13.

The communication processing unit 117 performs control for transmitting and receiving data when the gaming apparatus 1 performs communication with another gaming apparatus 1 via a network line 2. Specifically, the communication processing unit 117 transmits, to the other gaming apparatus 1 via the network line 2, operation signals that have been input from the controllers 3 and 4 and signals that have been output from the CPU 111a. The communication processing unit 117 also receives signals transmitted from the other gaming apparatus 1 via the network line 2, and inputs them to the CPU 111a.

The signal transmission/reception unit 118 receives signals that have been transmitted from the controllers 3 and 4 by short-range wireless communication. The signals from the controllers 3 and 4 include operation information regarding operation buttons that the controllers 3 and 4 are provided with, as well as data detected by various sensors 47 (described later) that the controller 4 is provided with. The CPU 111a causes the game to progress using these signals transmitted from the controllers 3 and 4. The signal transmission/reception unit 118 also transmits various types of signals (e. g. , a signal for lighting a light emitting unit 45 (described later) of the controller 4) to the controllers 3 and 4.

The monitor 13 is an apparatus for displaying game images that show the state of game progression according to video signals sent from the main body 11, and outputting audio such as sound effects from the speakers 13a according to audio signals sent from the main body 11. The monitor 13 is configured by a television receiver or the like that includes external input terminals for receiving video signals and audio signals.

The disc 14 is an optical disc such as a DVD-ROM or a CD-ROM. The game program, various types of data necessary for executing the game program, and image data are recorded on the disc 14. The memory card 15 is a data-rewritable nonvolatile recording medium such as a flash memory. Information recorded in the work area of the RAM 111c disappears when the power of the main body 11 of the gaming apparatus is turned off. Accordingly, among the information in the work area of the RAM 111c, information regarding game progression that is to be preserved instead of being allowed to disappear is recorded in the memory card 15.

The gaming apparatus 1 can connect to the network line 2 (Internet line or the like) via a network adapter 16. In this case, a game (so-called "online game") can be played between multiple gaming apparatuses 1 via the network line 2. Although a game played using only one gaming apparatus 1 is described in one embodiment, the present invention can also be applied to such online games.

The controllers 3 and 4 are operated by the user P in order to cause the player character PC to perform actions, and to make various types of game-related settings. When the controllers 3 and 4 are operated by the user P, operation signals are transferred from the controllers 3 and 4 to the control unit 111. The player character PC displayed on the monitor 13 performs predetermined actions in accordance with the operation signals. Examples of the predetermined actions include movement actions such as running, crouching, and jumping, and attack actions for attacking an opponent using a weapon. In one embodiment, the controller 3 is used for movement operations and attack operations of the player character PC. The controller 4 is mainly used for operations for using weapons that the player character PC has, and cannot be used for operations for moving the player character PC to another location. Accordingly, even when using the controller 4 for operating weapons that the player character PC has, the user P also needs to use the controller 3. The controller 3 corresponds to the "wireless controller WC" in FIG. 1B, and the controller 4 corresponds to the "stick-type controller MC" in FIG. 1B.

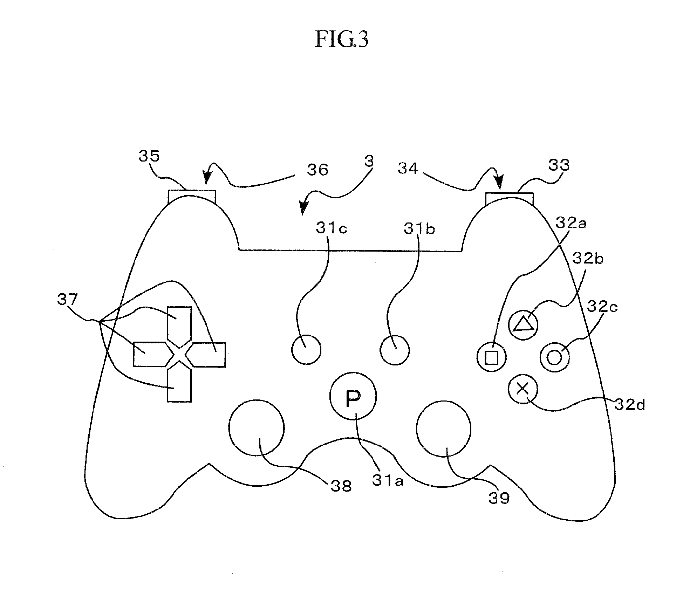

FIG. 3 is a diagram for describing the controller 3 (referred to hereinafter as the "wireless controller 3").

As shown in FIG. 3, the wireless controller 3 includes a power button 31a, a start button 31b, a select button 31c, and operation buttons and the like (a square button 32a, a triangle button 32b, a circle button 32c, an X button 32d, an R1 button 33, an R2 button 34, an L1 button 35, an L2 button 36, direction keys 37, an L stick 38, and an R stick 39) . Note that the R2 button 34 and the L2 button 36 are not shown in FIG. 3 since they are provided below (on the back side of the paper plane in FIG. 3) the R1 button 33 and the L1 button 35 of the wireless controller 3.

The power button 31a is a button for switching the power of the wireless controller 3 between the on state and the off state each time it is pressed, and thus starts and stops the wireless controller 3. The start button 31b is a button for starting the game and opening a pause menu. The select button 31c is a button for skipping a demo. The operation buttons and the like are used for, for example, operations for causing the player character PC to performactions (e.g., operations for moving the player character PC to another location, displaying a firing sight on the game screen, moving the sight, and causing the player character PC to fire), operations for moving the camera viewpoint, and operations for displaying a map. The operation buttons and the like include buttons that are operated by being pressed and sticks that are operated by being tilted.

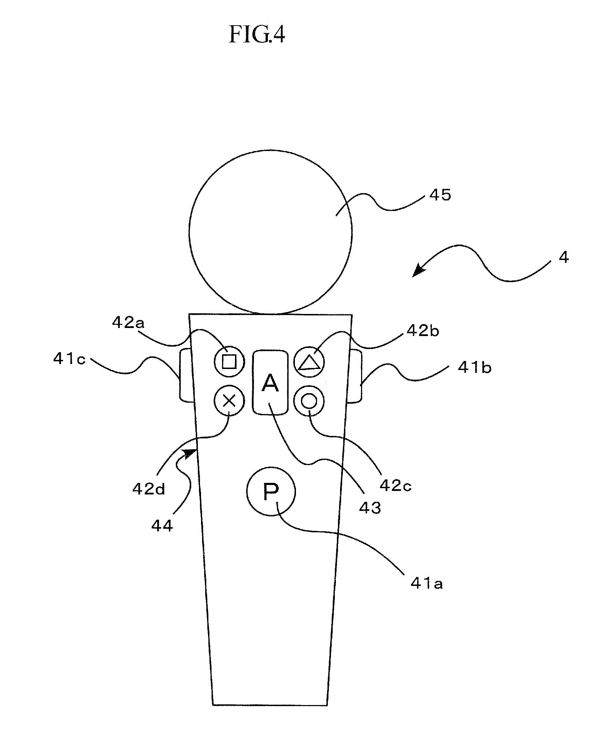

FIG. 4 is a diagram for describing the controller 4 (referred to hereinafter as the "stick-type controller 4").

As shown in FIG. 4, the stick-type controller 4 includes a power button 41a, a start button 41b, a select button 41c, operation buttons and the like (a square button 42a, a triangle button 42b, a circle button 42c, an X button 42d, an A button 43, and a T button 44), and the light emitting unit 45. Note that the T button 44 is not shown in FIG. 4 since it is provided on the back side (back side of the paper plane in FIG. 4) of the stick-type controller 4. Also, although not shown, various sensors 47 (described later) are included in the stick-type controller 4.

The power button 41a is a button for switching the power of the stick-type controller 4 between the on state and the off state each time it is pressed, and thus starts and stops the stick-type controller 4. The start button 41b is a button for starting the game and opening a pause menu. The select button 41c is a button for skipping a demo. The operation buttons and the like are used for, for example, operations for causing the player character PC to mainly perform attack actions (e.g., operations for displaying a firing sight on the game screen and causing the player character PC to fire) and operations for displayingamap. The light emitting unit 45 is a member for emitting light in a predetermined case. The light emitting unit 45 is used for detecting the position and the like of the stick-type controller 4 by being captured by a camera (not shown) included in the gaming apparatus 1 . The light emittingunit 45 also emits different colors of light according to identification information that has been set. Accordingly, when multiple stick-type controllers 4 are connected to the gaming apparatus 1, the gaming apparatus 1 can identify the position of each of the stick-type controllers 4 via the camera. Various sensors detect the rotation and tilt of the stick-type controller 4. This detected information is operation input for identifying the tilt and orientation of the stick-type controller 4. For example, the user P can move the sight displayed on the game screen by tilting and moving the stick-type controller 4.

The types and number of operation buttons and the like differ between the wireless controller 3 and stick-type controller 4, and their arrangements are also different. Accordingly, the operation buttons for controlling the player character PC and the like also differ between the wireless controller 3 and the stick-type controller 4.

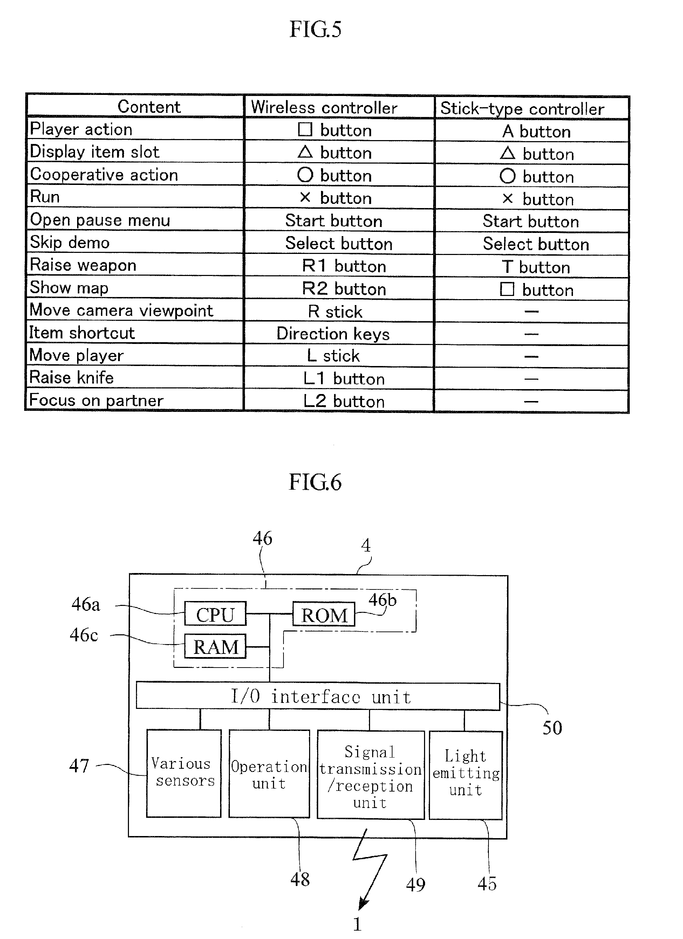

FIG. 5 is a diagram for describing the correspondence between operation buttons and the like of the controllers 3 and 4.

The left-side fields in the table shown in FIG. 5 show operation content. The central fields show operation buttons and the like of the wireless controller 3 for performing the operation content described in the left-side fields. The right-side fields show operation buttons of the stick-type controller 4 for performing the operation content described in the left-side fields. Note that a "-" in a right-side field indicates that the operation cannot be performed with the stick-type controller 4. As shown in FIG. 5, there are cases where even in the case of performing the same operation, different operation buttons are operated between the wireless controller 3 and the stick-type controller 4 . For example, whereas the operation for "player action" is performed by pressing the square button 32a in the case of the wireless controller 3, it is performed by pressing the A button 43 in the case of the stick-type controller 4. Similarly, whereas the operation for "raise weapon" is performed by pressing the R1 button 33 in the case of the wireless controller 3, it is performed by pressing the T button 44 in the case of the stick-type controller 4. Also, whereas the operation for "display map" is performed by pressing the R2 button 34 in the case of the wireless controller 3, it is performed by pressing the square button 42a in the case of the stick-type controller 4.

FIG. 6 is a block diagram showing the internal configuration of the stick-type controller 4.

The stick-type controller 4 includes the light emitting unit 45, a control unit 46, the various sensors 47, an operation unit 48, and a signal transmission/reception unit 49. An I/O interface unit 50 is connected to the control unit 46. The light emitting unit 45, the various sensors 47, the operation unit 48, and the signal transmission/reception unit 49 are connected to the I/O interface unit 50. The control unit 46 has a microcomputer that performs overall control of the operations of the stick-type controller 4. The microcomputer is constituted by the CPU 46a, a ROM 46b, a RAM 46c, and the like. These constituent elements are connected to each other by a bus line.

The CPU 46a controls the stick-type controller 4 based on a control program stored in the ROM 46b. The RAM 46c provides a work area for processing performed by the CPU 46a. The ROM 46b stores the control program for controlling the stick-type controller 4.

The various sensors 47 are for detecting the rotation and tilt of the stick-type controller 4, and includes a gyroscope, an acceleration sensor, and the like. The operation unit 48 detects the operation of the operation buttons and the like as operation signals. The signal transmission/reception unit 49 transmits information detected by the various sensors 47 and operation signals detected by the operation unit 48 to the gaming apparatus 1 by short-range wireless communication. The signal transmission/reception unit 49 also receives various types of signals that are transmitted from the gaming apparatus 1.

Note that a description of the internal configuration of the wireless controller 3 will not be given since it is similar to the internal configuration of the stick-type controller 4 shown in FIG. 6, with the exception of not being provided with the light emitting unit 45 and the various sensors 47.

Next described is a controller assignment table for assigning controller numbers serving as identification information to the controllers that are connected to the main body 11 of the gaming apparatus.

FIG. 7 is a diagram for describing an example of the controller assignment table. The controller assignment table is recorded in the RAM 111c. The controller assignment table is rewritten when a controller is connected to the main body 11 of the gaming apparatus, when a controller is disconnected from the main body 11 of the gaming apparatus, and when controllers connected to the main body 11 of the gaming apparatus are paired.

In FIG. 7, "Controller number" indicates the number serving as identification information that is assigned to a controller connected to the main body 11 of the gaming apparatus. The controller number is assigned regardless of the type of controller. "Controller type" is information indicating the types of the controllers that have been assigned the controller numbers. In FIG. 7, "MC" is described in the case where the controller is the stick-type controller 4, and "WC" is described in the case where the controller is the wireless controller 3. "Pairing number" indicates a number assigned when controllers having the assigned controller numbers are paired, and the same number is assigned to paired controllers. In FIG. 7, these numbers are assigned in the order of pairing. Note that one stick-type controller 4 and one wireless controller 3 are paired with each other in one embodiment. Although not shown in FIG. 7, information that enables identifying the order of connection is also recorded in the controller assignment table.

When a controller is connected to the main body 11 of the gaming apparatus, a controller number in the controller assignment table that has not been assigned to another controller is assigned to the connected controller. Specifically, when the signal transmission/reception unit 118 receives a signal indicating that a controller has been powered on (a signal indicating that the power button was pressed while in the power off state, which is referred to hereinafter as the "connection signal"), the CPU 111a references the controller assignment table recorded in the RAM 111c and acquires an unused controller number. The CPU 111a then sets the type of the connected controller in the "controller type" field corresponding to that controller number. Note that information indicating the type of controller is included in the connection signal that was received from the controller. The CPU 111a also transmits the acquired controller number to the connected controller. The CPU 46a of the controller (see FIG. 6) records the received controller number in the RAM 46c. When the CPU 46a transmits an operation signal, it attaches the controller number to the transmitted operation signal as identification information. Note that the CPU 46a can use an identification number that has been assigned to the controller in advance, instead of using the controller number. In this case, the CPU 111a records the correspondence relationship between this identification number and the controller number of the controller assignment table in the RAM 111c. When the CPU 46a transmits an operation signal, it attaches the identification number to the transmitted operation signal.

When a controller is disconnected, the information in the corresponding "controller type" field in the controller assignment table is deleted by the CPU 111a, and that controller number is set to the unused state. Also, when controllers are paired, a pairing number is set in the "pairing number" fields corresponding to the paired controllers. Note that in the case where a controller is disconnected, information in the corresponding "pairing number" field is also deleted, and information in the "pairing number" field corresponding to the other controller that had been paired with that controller is also deleted.

In FIG. 7, the stick-type controller 4 that has been assigned the controller number "0" and the wireless controller 3 that has been assigned the controller number "4" have been paired and assigned the pairing number "1". Also, the stick-type controller 4 that has been assigned the controller number "2" and the wireless controller 3 that has been assigned the controller number "5" have been paired and assigned the pairing number "2". Note that the wireless controller 3 that has been assigned the controller number "6" is not paired. Also, the controller numbers "1" and "3" are unused.

In one embodiment, each player character is associated with a pairing number that has been assigned in the controller assignment table. For example, in the controller assignment table shown in FIG. 7, it is assumed that a player character PC1 is associated with the pairing number "1", and a player character PC2 is associated with the pairing number "2" . In this case, the player character PC1 is controlled with the stick-type controller 4 that has been assigned the controller number "0" and the wireless controller 3 that has been assigned the controller number "4", and the player character PC2 is controlled with the stick-type controller 4 that has been assigned the controller number "2" and the wireless controller 3 that has been assigned the controller number "5". Note that the association between the pairing numbers and the player characters is not limited to this.

Upon receiving an operation signal from a controller, the CPU 111a recognizes which player character is to be controlled by the operation signal based on the controller number attached to the operation signal and the controller assignment table. For example, in the case of the above-described example, if the controller number attached to the operation signal is "5", the CPU 111a recognizes that the operation signal was input from the wireless controller 3 in order to control the player character PC2. The CPU 111a can also recognize the connection state and pairing state of each controller by referencing the controller assignment table.

Next described is control mode determination process with reference to FIGS. 8 and 9.

FIG. 8 is a flowchart for describing process for making a control mode determination when the game starts (referred to hereinafter as "at-start control mode determination process"), which is performed by the CPU 111a of the gaming apparatus 1.

The at-start control mode determination process is executed when the game starts, or when the game is reset and restarted. First, it is determined whether the stick-type controller 4 (abbreviated as "MC" in the flowcharts shown in FIGS. 8 and 9) is connected to the gaming apparatus 1 (step S1). This determination is performed by referencing the controller assignment table (see FIG. 7) . Specifically, the CPU 111a searches the controller assignment table in the order of the controller numbers, and determines whether there is a controller number for which "MC" is described in the corresponding "controller type" field. Subsequent determinations are also performed by the CPU 111a referencing the controller assignment table. When it has been determined that the stick-type controller 4 is not connected (step S1 : NO) , it is determined that the control mode is the control mode W, and a control mode flag is set so as to indicate the control mode W (step S4). Then the at-start control mode determination process ends. Note that the control mode W is the control mode in which operations are performed using the wireless controller 3 by itself. Also, the control mode flag is a flag that indicates the current control mode, and is set to "0" in the case of the control mode W and to "1" in the case of the later-described control mode MW, for example.

When it was determined in step S1 that the stick-type controller 4 is connected (step S1: YES), it is then determined whether pairing has been completed (step S2). Specifically, it is determined whether a pairing number has been assigned by referencing the "pairing number" field (see the controller assignment table shown in FIG. 7) that corresponds to the stick-type controller 4 that was confirmed as being connected in step S1. When it was determined that pairing has not been completed (step S2 : NO) , the procedure returns to step S2, and step S2 is repeated until pairing has been completed. In one embodiment, the player character PC cannot be controlled if the user is using the stick-type controller 4 by itself, and therefore a standby state is entered until the stick-type controller 4 and the wireless controller 3 are associated with each other. Processing for prompting the user P to perform pairing is executed separately, but details of this process will not be given. When it was determined in step S2 that pairing has been completed (step S2: YES), it is determined that the control mode is the control mode MW, and the control mode flag is set so as to indicate the control mode MW (step S3) . Then the at-start control mode determination process ends. Note that the control mode MW is a control mode in which operations are performed using both the wireless controller 3 and the stick-type controller 4.

In the at-start control mode determination process, the determination of whether the stick-type controller 4 is connected is performed by referencing the controller assignment table. This is equivalent to determining whether a connection signal has been received from the stick-type controller 4. In other words, the setting of the control mode depending on whether the stick-type controller 4 is connected corresponds to the specification of the "used operation unit" based on the "received operation signal" of the present invention.

Note that in the case where multiple wireless controllers 3 are connected to the gaming apparatus 1, the at-start control mode determination process is performed the same number of times as the number of connected wireless controllers 3. In this case, a control mode flag is set for each of the connected wireless controllers 3. For example, when the controller assignment table is in the state shown in FIG. 7, first it is confirmed that pairing has been completed for the stick-type controller 4 having the controller number "0", and the control mode flag for the wireless controller 3 having the controller number "4" that is the pairing partner is set so as to indicate the control mode MW (in FIG. 8, step S1: YES, step S2: YES, step S3) . Next, it is confirmed that pairing has been completed for the stick-type controller 4 having the controller number "2", and the control mode flag for the wireless controller 3 having the controller number "5" that is the pairing partner is set so as to indicate the control mode MW (in FIG. 8, step S1: YES, step S2: YES, step S3). Next, regardless of the fact that a non-paired wireless controller 3 is connected, no other stick-type controllers 4 are connected, and therefore the control mode flag for the wireless controller 3 having the controller number "6" is set so as to indicate the control mode W (in FIG. 8, step S1: NO, step S4).

FIG. 9 is a flowchart for describing process for making a control mode determination when the game is in progress (referred to hereinafter as "in-progress control mode determination process") , which is performed by the CPU 111a of the gaming apparatus 1.

The in-progress control mode determination process is executed at a predetermined timing (e.g., once each frame) when the game is in progress in the case where the control mode flag was set so as to indicate the control mode MW in the at-start control mode determination process (see FIG. 8) . First, it is determined whether operation input from the stick-type controller 4 was detected (step S11). When operation input from the stick-type controller 4 was detected (step S11 : YES), it is determined that the control mode is the control mode MW, and the control mode flag is set so as to indicate the control mode MW (step S12). Then the in-progress control mode determination process ends. In other words, since it can be detected that the stick-type controller 4 is being operated by the user P, it can be determined that the control mode is the control mode MW. In this case, the setting of the control mode MW in the case where operation input from the stick-type controller 4 was detected corresponds to "specify a used operation unit so as to include an operation unit that transmitted an operation signal" of the present invention.

When operation input from the stick-type controller 4 is not detected in step S11 (step S11 : NO), it is determined whether predetermined operation input from the wireless controller 3 (abbreviated as "WC" in the flowchart shown in FIG. 9) was detected (step S13) . When predetermined operation input from the wireless controller 3 was detected (step S13: YES), it is determined that the control mode is the control mode W, and the control mode flag is set so as to indicate the control mode W (step S14) . Then the in-progress control mode determination process ends. When predetermined operation input from the wireless controller 3 is not detected (step S13: NO), it is determined that the control mode is the control mode MW, and the control mode flag is set so as to indicate the control mode MW (step S12) . Then the in-progress control mode determination process ends. In other words, only when predetermined operation input from the wireless controller 3 is detected, it is determined that the stick-type controller 4 is not being operated by the user P, and it is determined that the control mode is the control mode MW. In this case, the "wireless controller 3" corresponds to the "first operation unit" of the present invention, and the "stick-type controller 4" corresponds to the "second operation unit" of the present invention.

In one embodiment, the predetermined operation input from the wireless controller 3 is the pressing of the square button 32a, the triangle button 32b, the circle button 32c, the X button 32d, the R1 button 33, or the R2 button 34. Regardless of the fact that the stick-type controller 4 is also provided with operation buttons that corresponds to the above-described operation buttons (see FIG. 5), it can be determined that the user P is not operating the stick-type controller 4 if these operation buttons of the wireless controller 3 were operated by the user P. Note that the pressing of the start button 31b and the select button 31c is excluded from the predetermined operation input because it is possible for the user P to operate these buttons of the wireless controller 3 even in the control mode MW. It should also be noted that the predetermined operation input is not limited to this, and may be all of the operations that are duplicated with the stick-type controller 4. Also, the predetermined operation input may be all operation input from the wireless controller 3. On the other hand, the predetermined operation input may be further limited, such as the case of being the pressing of only the square button 32a, the triangle button 32b, the R1 button 33, and the R2 button 34.

In the case where the control mode flag was set so as to indicate the control mode W in the in-progress control mode determination process (step S14 in FIG. 9), it is possible for the user P to again start to use the stick-type controller 4, and therefore the in-progress control mode determination process is executed at a predetermined timing (e.g., once each frame) when the game is in progress. On the other hand, in the case where the control mode flag was set so as to indicate the control mode W in the at-start control mode determination process (step S4 in FIG. 8), the stick-type controller 4 is not connected, and it is not possible for the user P to use the stick-type controller 4, and therefore the in-progress control mode determination process is not executed. Note that in the case where the stick-type controller 4 can be connected when the game is in progress, it is sufficient for the in-progress control mode determination process to be executed even if the control mode flag was set so as to indicate the control mode W in the at-start control mode determination process. It should also be noted that the in-progress control mode determination process may be executed once every predetermined number of frames instead of being executed once each frame. Also, when multiple wireless controllers 3 are connected to the gaming apparatus 1, and multiple player characters are being controlled, the in-progress control mode determination process is performed for each player character (for each controller controlling a player character).

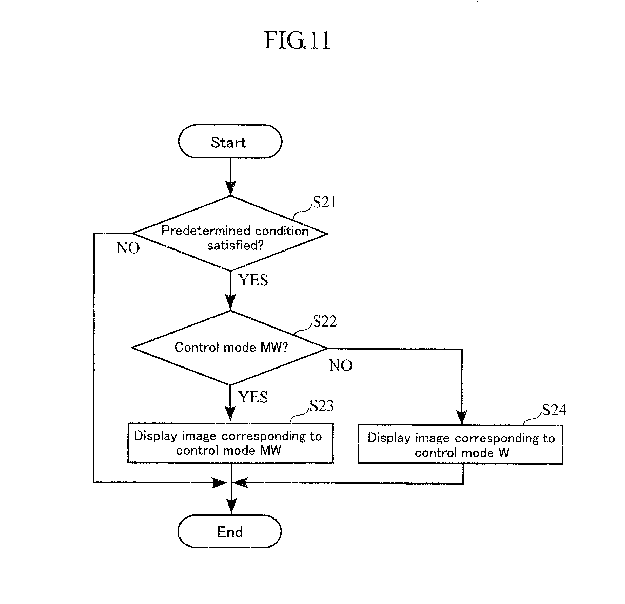

Next described is process for displaying control guidance according to the control mode with reference to FIGS. 10 and 11.

Control guidance is displayed in the case where a predetermined situation occurs when the game is in progress. Predetermined situations are set in advance, and one example is the case where the player character PC has approached a predetermined object. The control guidance display is a display for providing the user P with control guidance, one example of which the display of icons that show operation buttons for control and actions that the player character PC can perform (see FIGS. 1A and 1B). The operation procedure differs depending on the corresponding predetermined situation and the control mode. An operation procedure table is set in order to display control guidance in accordance with the corresponding predetermined situation and the current control mode.

FIG. 10 is a diagram for describing an example of the operation procedure table.

The "predetermined situation" fields on the left side in FIG. 10 indicate predetermined situations for displaying control guidance. In actuality, conditions (predetermined conditions) regarding which the CPU 111a can make determinations are set in these fields. For example, in the example of the situation "player character PC approached attaché case AC" shown in FIGS. 1A and 1B, a condition is set for making a determination that "distance between position coordinates of player character PC and position coordinates of attaché case AC is a predetermined distance or less". The "action" fields that are second from the left in the table shown in FIG. 10 indicate actions and the like that the player character PC can perform according to the predetermined situations described in the "predetermined situation" fields. For example, FIG. 10 shows that in the case of "player character PC approached attaché case AC", the player character PC can "open" the attaché case AC. The "operation procedure" fields on the right side in the table shown in FIG. 10 indicate operation procedures for causing the player character PC to perform the actions described in the "action" fields. The operation procedure differs depending on the control mode, and therefore the fields on the left side in the "operation procedure" fields indicate operation procedures in the case of the control mode MW, and the fields on the right side indicate operation procedures in the case of the control mode W. For example, FIG. 10 shows that in the case of the control mode W, "press square button" is required in order to "open" the attaché case AC. In actually, image data for an icon indicating an operation button or the like is set.

In the case where the situation when the game is in progress corresponds to a predetermined situation set in the operation procedure table (in the case where the CPU 111a determined that a predetermined condition has been satisfied) , an icon indicating the operation procedure that corresponds to the predetermined situation and the control mode and a character string that indicates the action that corresponds to the predetermined situation are displayed on the game screen as a control guidance icon CI (see FIGS. 1A and 1B).

FIG. 11 is a flowchart for describing process for displaying control guidance when the game is in progress (referred to hereinafter as "control guidance display process"), which is performed by the CPU 111a of the gaming apparatus 1.

The control guidance display process is executed at a predetermined timing (e.g., once each frame) when the game is in progress. First, it is determined whether a predetermined condition has been satisfied (i.e., whether the game situation corresponds to a predetermined situation set in the operation procedure table) (step S21) . When a predetermined condition has not been satisfied (step S21: NO), the control guidance display process ends. On the other hand, when a predetermined condition has been satisfied (step S21: YES), it is determined whether the control mode flag indicates the control mode MW (step S22) . When the control mode flag indicates the control mode MW (step S22: YES), image display is performed according to the control mode MW (see FIG. 1B), and the control guidance display process ends. On the other hand, when the control mode flag does not indicate the control mode MW (step S22: NO), that is to say, in the case of the control mode W, image display is performed according to the control mode W (see FIG. 1A) , and the control guidance display process ends. In other words, control guidance is displayed according to the control mode when a predetermined condition has been satisfied.

Also, when multiple wireless controllers 3 are connected to the gaming apparatus 1, and multiple player characters are being controlled, the control guidance display process is performed for each player character. In this case, it is necessary to indicate which player character (and the user controlling the player character) each control guidance is for (e.g. , display images along with a display that specifies a player character or a controller) .

In one embodiment, the control mode flag is set upon identifying the current control mode. Control guidance is then displayed based on the operation procedure that corresponds to the content of the control mode flag (i.e., the current control mode) and the corresponding predetermined situation. Accordingly, control guidance is displayed according to the current control mode, thus resolving problems such as the user P becoming confused or performing the wrong operation due to seeing inappropriate control guidance.

Also, in one embodiment, when the game starts, it is determined that the control mode is the control mode W when the stick-type controller 4 is not connected, and it is determined that the control mode is the control mode MW when the stick-type controller 4 is connected and paired with the wireless controller 3. Also, when the game is in progress, it is determined that the control mode is the control mode MW when operation input was received from the stick-type controller 4, and it is determined that the control mode is the control mode W when predetermined operation input was received from the wireless controller 3. Accordingly, even in the case where the control mode changes when the game is in progress, the current control mode is appropriately identified, and therefore appropriate control guidance is displayed. Also, there is no need to make a special setting for changing the control mode (e.g., a setting made by interrupting the game and opening an option menu in the pause menu). Accordingly, the user P can freely change the control mode at will even when the game is in progress.

Note that although the case where the control guidance display is different between the control mode W and the control mode MW is described in the above embodiment, there is no limitation to this. For example, the control guidance display may be different between the control mode W and a control mode in which the stick-type controller 4 is used by itself. In this case, the determination regarding the control mode can be made based on whether the controller 3 or 4 is connected, or whether operation input from the controller 3 or 4 was detected. In this case, the determination of the control mode based on the controller from which operation input was detected corresponds to "specify a used operation unit so as to include an operation unit that transmitted an operation signal" of the present invention.

Also, the controllers that are used are not limited to the wireless controller 3 and the stick-type controller 4, and it is possible to use various types of controllers that can be connected to the gaming apparatus 1. Also, the number of controllers that are used is not limited to two, and three or more controllers may be used. In this case, a control mode maybe set for each combination of controllers. Also, control members other than controllers may be used (e.g., a keyboard, a mouse, a touch panel, and a microphone for inputting audio, as well a camera and various sensors (including sensors not included in the controller) for detecting a person's action as operation input). For example, depending on whether the user is operating a controller, performing input on a touch panel, or inputting audio using the microphone, control guidance may be displayed according to the corresponding operation procedure.

The present invention may also be applied to the case where more than one of the same type of controller are connected to the main body 11 of the gaming apparatus. Specifically, control guidance may be displayed such that the user can recognize which controller certain control guidance is for. For example, when one user is using the same type of controller in both the left hand and the right hand, control guidance may be displayed along with a display that makes it possible to specify the controllers, such as displaying "For right hand (controller No. 1)" and "For left hand (controller No. 2)". Also, when multiple users are controlling respective player characters using the same type of controller with one gaming apparatus 1, control guidance may be displayed along with a display that makes it possible to specify the controllers, such as displaying "User P1 (controller No. 1) ".

Also, when multiple users are controlling respective player characters with one gaming apparatus 1, there are cases where the game screen is divided, and the player characters are displayed in respective divided screens. In this case, control guidance may be displayed in each divided screen according to the control mode of the corresponding user.

Although the case where one player character PC is controlled with the stick-type controller 4 and the wireless controller 3 is described in the above embodiment, the target of control is not limited to being one character. For example, the present invention is also applicable to the case of controlling a group made up of multiple characters.

Although the case of displaying control guidance icons CI as the control guidance display is described in the above embodiment, there is no limitation to this. For example, in order to make the control guidance content easier to understand, a sentence such as "Press the square button to open the attaché case." may be displayed. Also, a video showing the control guidance content may be displayed.

FIGS. 12A and 12B are diagrams for describing other examples of control guidance display. FIGS. 12A and 12B show a scene in which the player character PC has grabbed an enemy character EC' s wrists to prevent an attack, and the user P at that time.

FIG. 12A shows the case where the user P is playing the game in the control mode W. Control guidance for the player character PC to perform the action "struggle" in order to prevent the attack by the enemy character EC is displayed as a control guidance icon CI. The control guidance icon CI is configured by a video in which an image of the L stick is consecutively tilted to the left and right and the character string "Struggle". FIG. 12B shows the case where the user P is playing the game in the control mode MW. In this case, a control guidance icon CI is displayed in the same situation as that in FIG. 12A, but the video showing the operation procedure is a video in which an image of the stick-type controller MC is consecutively waved to the left and right.

Also, there is no limitation to the control guidance being displayed on the screen, and control guidance may be presented using another presentation means. For example, guidance may be presented using audio such as "Press the square button to open the attaché case." A combination of audio and image display may also be used. Also, the operation button of the corresponding controller may be lit or flashed. Furthermore, the entirety of the corresponding controller or one part thereof (e.g., the light emitting unit 45 of the stick-type controller MC) may be lit or flashed. Also, when multiple stick-type controllers MC are connected, colors corresponding to the identification information of the stick-type controllers MC may be displayed in the control guidance display (e.g., "Red" is displayed above a control guidance icon CI, or the control guidance icon CI itself is displayed in red) , and the light emitting unit 45 of the corresponding stick-type controller MC may furthermore be lit or flashed.

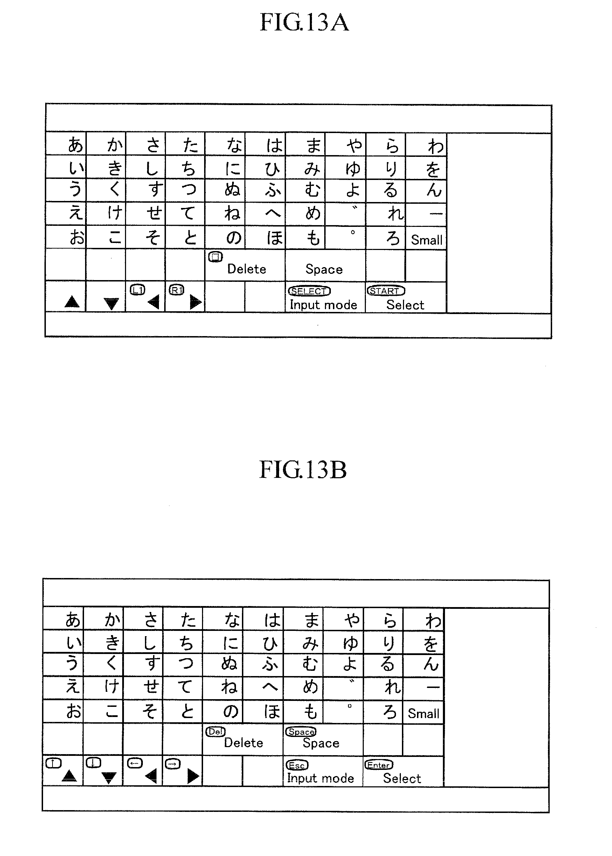

FIGS. 13A and 13B show character input screens for inputting characters to the gaming apparatus 1. Characters can be input in the character input screens using the controllers that are connected to the gaming apparatus 1 . It is also possible to connect a keyboard to the gaming apparatus 1 and input characters using the keyboard. FIG. 13A shows a character input screen displayed when the user is using a controller, and FIG. 13B shows a character input screen when the user is using a keyboard. The control guidance display for deleting characters, for example, is different between FIGS. 13A and 13B. Specifically, this control guidance display is an icon showing the square button in FIG. 13A, and is an icon showing the Del key in FIG. 13B. In this way, control guidance may be displayed regardless of game progression.

Also, the pause menu is opened if the start button 31b or 41b is pressed when the game is in progress. If "Command list" is selected in the pause menu, an operation list (command list), which is a list of actions corresponding to the operation buttons and the like, is displayed. The command list is a list of, for example, the operation buttons and the like in the central field (or the right-side fields) in the table shown in FIG. 5 and the content (actions) in the corresponding left-side fields. At this time, the displayed command list may be changed depending on whether the start button 31b of the wireless controller 3 was pressed or whether the start button 41b of the stick-type controller 4 was pressed. Forexample, in the former case, the CPU 111 a may determine that the control mode is the control mode W and display the command list that corresponds to the operation buttons and the like in the central fields in the table shown in FIG. 5. In the latter case, the CPU 111a may determine that the control mode is the control mode MW and display the command list that corresponds to the operation buttons and the like in the right-side fields in the table shown in FIG. 5. The command list that corresponds to the control mode is automatically displayed in these cases, thus saving the user the trouble of selecting the command list that corresponds to the current control mode in the pause menu.

Although the example of an action game is described in the above embodiment, there is no limitation to this. The present invention is also applicable to games in various genres, such as RPGs (role playing games), shooting games, fighting games, and adventure games . The present invention is also applicable to games in which a team of characters controlled by multiple users or characters controlled by the CPU cooperate to fight an enemy character, and games in which the enemy character is a character controlled by another user.

Although the case of implementing a game with a home gaming apparatus is described in the above embodiment, there is no limitation to this. The present invention is also applicable to the case of implementing a game with an arcade gaming apparatus, a personal computer in which game software is loaded, and the like. For example, in the case of implementing a game with a personal computer (see FIGS. 14A and 14B), the CPU may determine whether the user P is performing operations using a keyboardK or a controller C. Then, it is sufficient to display control guidance corresponding to the keyboard K in the case of a control mode in which operations are performed using the keyboard K, and display control guidance corresponding to the controller C in the case of a control mode in which operations are performed using the controller C.

The present invention is also applicable to the case of implementing a game with a so-called portable gaming apparatus in which the main body of the gaming apparatus is provided with a monitor, operation buttons, and the like. With portable gaming apparatuses, controllers and the like are built into (connected to) the main body of the gaming apparatus. Accordingly, in this case, the built-in controller, touch panel, microphone, and the like can be considered to be connected to the portable gaming apparatus. Control guidance that corresponds to the operation procedure may therefore be displayed depending on whether the user is operating operation buttons, performing input using the touch panel, or inputting audio using the microphone.

Although the case of applying the present invention to a game program is described in the above embodiment, the present invention maybe applied to a program other than a game . For example, the present invention is also applicable to a program for performing non-game operations that are executedwith a gaming apparatus (e.g., email, chat, mainbodysettings, listeningtomusic, watchingvideos or TV, and browsing electronic books, the Internet, and the like) . The present invention is also applicable to programs other than games that are executed by a computer that is not a gaming apparatus . For example, the CPU may determine whether a user is operating the computer using a keyboard or a mouse. It is then sufficient to display control guidance for keyboard input in the case of a control mode in which the user is performing operations using the keyboard, and display control guidance for mouse input in the case of a control mode in which the user is performing operations using the mouse.

The computer and recording medium of the present invention are not limited to the embodiments described above. The specific configurations of the computer and recording medium of the present invention can be designed and modified in various ways.

## Claims

1. A computer to which operation units for inputting an operation signal can be connected, the computer comprising:
a reception unit that receives an operation signal from an operation unit;
a specification unit that specifies a used operation unit that is an operation unit being used by a user, based on the operation signal received by the reception unit;
a storage control unit that stores presentation information in a storage unit in association with a predetermined condition and the used operation unit, the presentation information being information that is to be presented to the user; and
a presentation control unit that, when the predetermined condition is satisfied, presents the presentation information stored in the storage unit using a presentation unit according to the predetermined condition and the used operation unit specified by the specification unit.

2. The computer according to claim 1, wherein the specification unit specifies the used operation unit so as to include the operation unit that transmitted the operation signal.

3. The computer according to claim 1,
wherein a first operation unit and a second operation unit among the operation units are connected to the computer, the second operation unit being associated with the first operation unit, and
when the computer received a predetermined operation signal, the specification unit specifies the used operation unit so as to not include the second operation unit.

4. The computer according to claim 1, wherein the specification unit specifies whether the used operation unit is a first used operation unit that is a used operation unit including only one operation unit, or a second used operation unit that is the used operation unit including a plurality of operation units.

5. The computer according to claim 4,
wherein the first used operation unit includes a predetermined operation unit, and
the second used operation unit includes the predetermined operation unit and the other operation units.

6. The computer according to claim 5, wherein the predetermined operation unit and the other operation units are different types of operation units.

7. The computer according to claim 1, wherein the presentation control unit causes the presentation unit to present presentation information that the user can perceive visually.

8. The computer according to claim 7,
wherein the presentation unit is a display apparatus, and
the presentation information is image information for indicating an operation procedure.

9. The computer according to claim 1, wherein the presentation control unit presents the presentation information that the user can perceive aurally.

10. The computer according to claim 1, wherein each operation unit is a controller for controlling a character.

11. A computer-readable recording medium having recorded thereon a program for causing a computer to which operation units for inputting an operation signal can be connected to function as:
a reception unit that receives an operation signal from an operation unit;
a specification unit that specifies a used operation unit that is an operation unit being used by a user, based on the operation signal received by the reception unit;
a storage control unit that stores presentation information in a storage unit in association with a predetermined condition and the used operation unit, the presentation information being information that is to be presented to the user; and
a presentation control unit that, when the predetermined condition is satisfied, presents the presentation information stored in the storage unit using a presentation unit according to the predetermined condition and the used operation unit specified by the specification unit.

12. The recording medium according to claim 11, wherein the specification unit specifies the used operation unit so as to include the operation unit that transmitted the operation signal.

13. The recording medium according to claim 11,
wherein a first operation unit and a second operation unit among the operation units are connected to the computer, the second operation unit being associated with the first operation unit, and
when the computer received a predetermined operation signal, the specification unit specifies the used operation unit so as to not include the second operation unit.

14. The recording medium according to claim 11, wherein the specification unit specifies whether the used operation unit is a first used operation unit that is a used operation unit including only one operation unit, or a second used operation unit that is a used operation unit including a plurality of operation units.

15. The recording medium according to claim 14,
wherein the first used operation unit includes a predetermined operation unit, and
the second used operation unit includes the predetermined operation unit and the other operation units.

16. The recording medium according to claim 15, wherein the predetermined operation unit and the other operation units are different types of operation units.

17. The recording medium according to claim 11, wherein the presentation control unit causes the presentation unit to present presentation information that the user can perceive visually.

18. The recording medium according to claim 17,
wherein the presentation unit is a display apparatus, and
the presentation information is image information for indicating an operation procedure.

19. The recording medium according to claim 11, wherein the presentation control unit presents presentation information that the user can perceive aurally.

20. The recording medium according to claim 11,
wherein the computer is a gaming apparatus, and
each operation unit is a controller for controlling a character.
